# FASCICULE DE BREVET EUROPEEN

(11) **EP 0 510 599 B1**
(45) Date de publication et mention de la délivrance du brevet: **04.06.1997**
(21) Numéro de dépôt: 92106862.3
(22) Date de dépôt: 22.04.1992
(51) Int. Cl.: G06K 7/06, G06K 13/08

(54) **Lecteur de carte à puce**
Chipkartenabtaster
Chip card reader

(30) Priorité: 26.04.1991 FR 9105192
(43) Date de publication de la demande: 28.10.1992
(73) Titulaire: FRAMATOME CONNECTORS PONTARLIER, 92400 Courbevoie (FR)
(72) Inventeur: Defrasne, André, F-25300 Pontarlier (FR)
(74) Mandataire: Weinmiller, Jürgen

(56) Documents cités:
- EP-A- 0 218 504
- DE-U- 8 908 801
- FR-A- 2 552 252
- US-A- 4 171 737

## Description

La présente invention concerne un lecteur de carte à puce et, plus particulièrement, un tel lecteur qui soit pourvu de moyens mécaniques établissant une pression entre une carte insérée dans le lecteur et les contacts de lecture.

On trouvera, dans la demande de brevet français FR-A-2 623 313, déposée le 13 novembre 1987 par la Société Demanderesse, une description des lecteurs de carte à puce en général et d'un cadre de contact pour carte à puce, en particulier. Il y est indiqué qu'un tel lecteur comprend des moyens de guidage ou de positionnement de carte comprenant un couloir de guidage de ladite carte, éventuellement des moyens servant à vérifier qu'une carte est présente dans le lecteur, dans la position adéquate pour la lecture, ainsi que des éléments de contact qui assurent le raccordement électrique avec des plages conductrices de la carte à puce, par lesquelles sont établis des circuits intéressant l'appareil incorporant le lecteur de carte à puce. Le cadre de contact est un élément unitaire remplissant les fonctions énoncées. Il permet de faire que, compte-tenu des tolérances de fabrication, la flexion des éléments de contact, à l'insertion d'une carte à puce, soit toujours telle que la pression de contact requise soit obtenue.

Ce type de lecteur de carte à puce peut faire l'objet d'actes de malveillance visant à en interdire le fonctionnement.

Un des actes parmi les plus fréquents consiste à introduire dans le couloir de guidage de la carte, différents objets étrangers, et par exemple une partie d'un corps de carte coupé de telle manière que sa longueur soit inférieure à la longueur dudit couloir.

Dans ce cas les usagers ne peuvent plus utiliser le lecteur de carte puisque la partie de corps de carte ne peut pas être extraite du couloir de guidage. Cela nécessite l'intervention d'une équipe de maintenance et interdit le fonctionnement dudit lecteur pendant une durée non négligeable.

De plus, bien que la fente d'entrée du couloir de guidage de la carte soit généralement choisie la plus petite possible, une personne malveillante peut y introduire un objet tel que tige, crochet, lime à ongle etc...et en manipulant cet objet de l'extérieur, réussir à accrocher les éléments de contact et les détériorer de manière irréversible, mettant ainsi le lecteur hors service.

Par ailleurs, on connaît par le document EP-A-218 504, un lecteur de carte à puce aménagé pour la confiscation d'une carte. La fonction de lecture de carte toute entière est alors effacée du trajet de la carte. Cela ne résoud en rien le problème que l'on vient de poser.

L'invention a pour objet de pallier de tel inconvénients en prévenant de tels actes de vandalisme. Elle propose à cet effet un lecteur de carte à puce comportant des éléments de contact, des moyens de guidage et de positionnement d'une carte, notamment un couloir de guidage, et une butée de positionnement fin de course, l'ensemble étant agencé de manière à assurer le raccordement électrique entre lesdits éléments de contact et les plages conductrices d'une carte insérée dans le lecteur jusqu'à être en appui contre ladite butée de positionnement de fin de course, caractérisé en ce que la butée de positionnement fin de course est une butée rétractable s'effaçant sous la force d'appui exercée par la carte sur celle-ci lorsque cette force est supérieure à une valeur déterminée, et en ce que le couloir de guidage de la carte est ouvert à son extrémité interne derrière ladite butée rétractable :

Avantageusement, la butée rétractable est une butée qui s'efface lorsque la force exercée sur celle-ci est supérieure à une valeur déterminée. Cette butée fait partie du couvercle dudit lecteur. Elle est disposée à l'extrémité d'un bras mobile dont la face interne comporte une nervure centrale. Elle est de plus munie d'une portée inclinée aux environs de 12° contre laquelle une carte insérée normalement dans le lecteur vient s'arrêter mais qui cause l'effacement de la butée lorsqu'elle est soumise à une pression anormalement élevée.

De plus, le couvercle comporte une nervure, fixe, disposée à côté de la butée pour plaquer convenablement la carte, et éviter que, du fait de sa courbure éventuelle, celle-ci ne soulève la butée. Avantageusement la nervure et la butée peuvent être obtenues lors du moulage du couvercle.

Ainsi des objets étrangers introduits par accident ou par vandalisme dans le couloir de guidage de la carte peuvent être éjectés vers l'intérieur de l'appareil, dans lequel est installé le lecteur de l'invention, par appui avec cette carte par l'utilisateur lui-même. En effet, avantageusement, la butée rétractable est une butée qui s'efface lorsque la force exercée sur celle-ci est supérieure à une valeur déterminée; La butée fin de course jouant, également, son rôle qui est de permettre un positionnement correct des plages conductrices de la carte par rapport aux éléments de contact.

Dans une réalisation avantageuse, les parties des éléments de contact qui font saillie dans le couloir de guidage portent des joues. Ces joues peuvent se prolonger jusque dans l'orifice qui a été ménagé dans le lecteur pour permettre le recul des éléments de contact.

Ces joues présentent une pente convenable pour que tout objet entré dans le couloir de guidage et appuyant en un point quelconque d'un élément de contact pousse ce dernier en dehors du couloir, sans risque de détérioration par poussée latérale sur l'élément de contact.

Les caractéristiques et avantages de l'invention ressortiront d'ailleurs de la description qui va suivre, à titre d'exemple non limitatif, en référence aux figures annexées sur lesquelles :
- les figures 1 et 2 représentent une vue en bout d'un cadre de contact pour lecteur de carte à puce de l'art antérieur, sur lequel est disposé un couvercle pour former le couloir de guidage de la carte, et une vue en perspective de ce cadre;
- les figures 3, 4 et 5 représentent une vue de dessus, une vue en bout et une vue de dessous du couvercle du lecteur de carte à puce selon l'invention, le couvercle de la figure 4 étant assemblé avec le cadre de contact du lecteur de carte puce selon l'invention;
- les figures 6 et 7 illustrent les avantages du lecteur de carte à puce selon l'invention.
- les figures 8 à 12 illustrent deux réalisations avantageuses du lecteur de carte à puce selon l'invention : les figures 8, 9 représentant une vue de dessus et, une vue en coupe partielle du cadre dudit lecteur de la première réalisation; la figure 10 étant une vue en coupe d'un élément de contact dudit cadre; la figure 11 représentant une vue en coupe partielle du cadre dudit lecteur de la seconde réalisation; la figure 12 étant une vue en coupe d'un élément de contact dudit cadre.

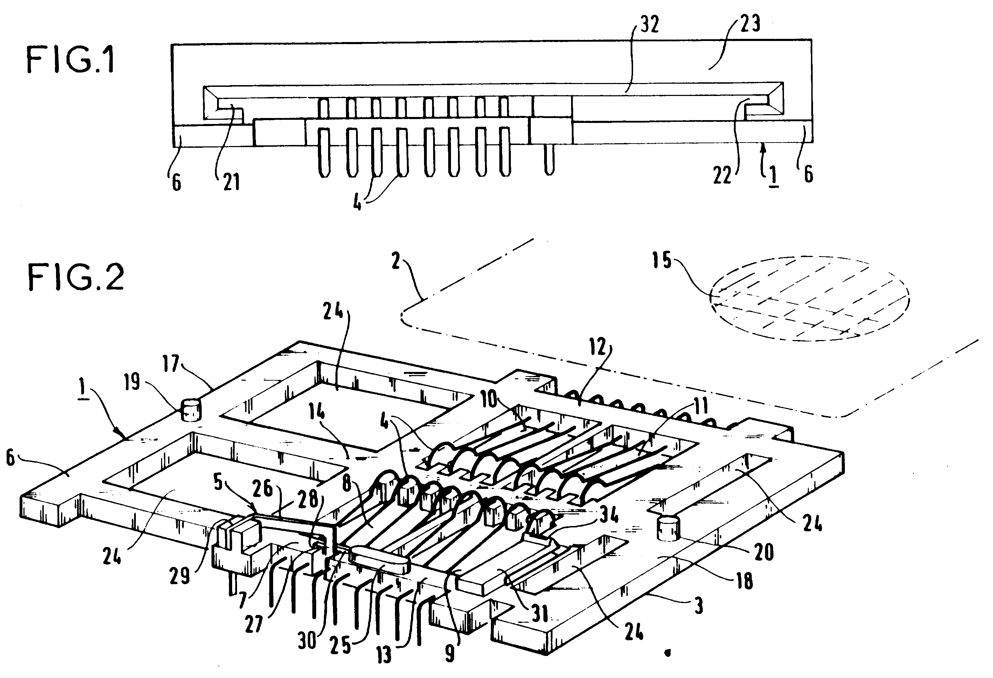

On a représenté à la figure 2, vu en perspective, un cadre de contact 1 d'un lecteur de carte à puce de l'art connu, avec une telle carte à puce 2 en position d'insertion. Pour les besoins de la description, ces deux pièces sont représentées à l'envers, par rapport à leur position naturelle, dans laquelle la carte est présentée avec sa zone de contact sur le dessus et dans laquelle le cadre de contact 1 doit se trouver au-dessus de la carte et tourné vers elle. Ce cadre comprend essentiellement une pièce en matière moulée isolante 3 jouant tout à la fois le rôle de support d'éléments de contact 4, servant au raccordement à la puce de la carte 2, de support d'un contact de fin de course 5, indiquant qu'une carte est présente dans le lecteur et qu'elle est en position adéquate pour être lue, et, au moins, de support de glissières 6, servant au guidage de la carte et destinées à la conduire dans la position adéquate indiquée.

A cette fin, le cadre de contact 1 comprend un cadre intérieur 7 constitué par les parties du cadre 1 délimitant les fenêtres de raccordement 8, 9, 10, 11. Les éléments de contact 4 s'étendent dans ces fenêtres, à partir des barreaux 12, 13 dans lesquels ils sont surmoulés. Les éléments de contact 4 sont profilés et font saillie au-dessus du plan 14 de la surface du cadre 1. Ils doivent venir en contact avec les plages de contact de la zone de raccordement 15 de la carte 1, lorsque celle-ci est correctement insérée dans le lecteur de carte à puce. Ce cadre intérieur 7 est prolongé par deux ailes 17, 18 qui se terminent, à l'opposé du cadre intérieur 7, par des supports de glissières 6, qui sont de simples surfaces plates, dotées au moins d'un pied de centrage 19, 20.

La figure 1 représente une vue de bout du cadre 1 de la figure 2. On y voit que les glissières 21 et 22 sont formées toutes les deux dans une pièce en matière isolante moulée 23 formant couvercle et qui est montée sur les supports 6 du cadre 1. Cette pièce 23 est précisément positionnée par rapport au cadre 1 par les pieds de centrage 19, 20. Elle guide la carte 2 dont elle enserre les bords. Comme on peut le voir à la figure 2, les ailes 17, 18 sont ajourées, pour économiser la matière, par des évidements 24.

Le cadre de contact 1 porte encore le contact de fin de course 5 et une butée de fin de course 25. Ce contact de fin de course 5 est un contact de repos, s'ouvrant lorsque la carte, peu avant de venir en appui sur la butée de fin de course 25, actionne la lame mobile 26 en appuyant sur son extrémité 27, ce qui la sépare de la lame de contact fixe 28. Les deux lames sont insérées à force dans des fentes 29, 30 du cadre 1, ce qui assure la précision de leur positionnement. Par ailleurs, la butée 25 assure le positionnement correct de la carte dans le lecteur de carte à puce. Le poussoir 31, est une lame élastique destinée à presser la carte à puce 2 vers le couvercle 23, ce qui la plaque contre la face de la glissière opposée aux éléments de contact pour définir de façon précise sa distance par rapport aux éléments de contact 4.

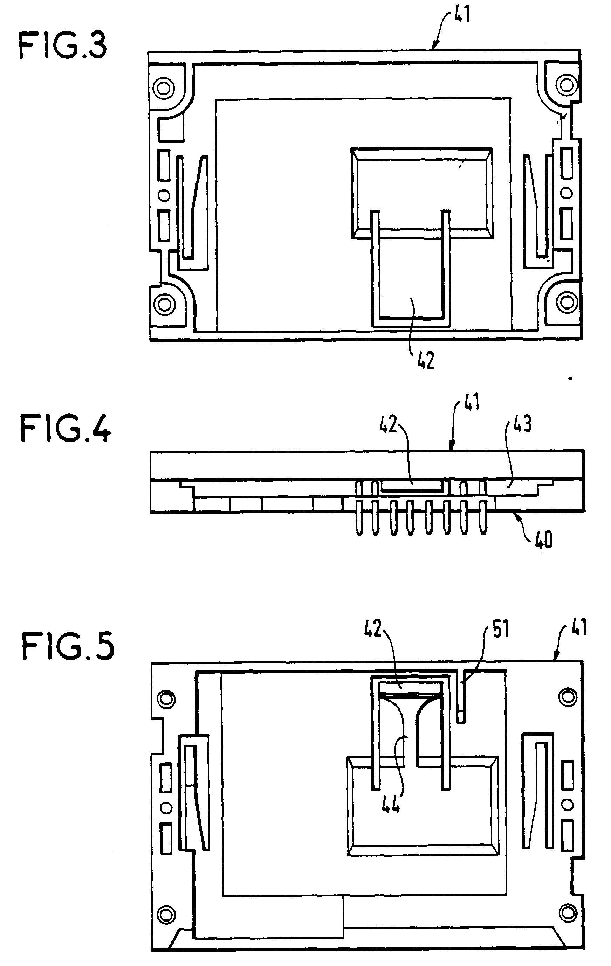

Le lecteur de carte à puce selon l'invention comprend un cadre de contact 40 tel que représenté sur les figures 1 et 2. Par contre le couvercle 41 dudit lecteur est représenté sur les figures 3, 4 et 5. Il comporte une butée de positionnement rétractable 42 qui remplit normalement une fonction de butée fin de course pour la carte de manière à permettre le raccordement électrique entre les éléments de contact du cadre et les plages conductrices de la carte à puce, mais qui s'efface lorsque la force d'appui exercée par la carte dépasse une valeur prédéterminée.

En combinaison avec cette butée, le lecteur de l'invention comporte un couloir de guidage de la carte 43, ouvert, si possible entièrement, à son extrémité vers l'intérieur de l'appareil dans lequel est disposé ledit lecteur. Ceci afin que les objets étrangers divers, introduits par accident ou par vandalisme, soient éjectés vers l'intérieur de l'appareil par introduction de la carte à puce.

La butée est disposée à l'extrémité d'un bras mobile dont la face interne porte une nervure centrale 44 à double finalité :
- assurer le maintien de la carte en bonne position par rapport à ladite butée;
- assurer la rigidité de cette butée.

Une nervure 51, fixe, disposée à côté de la butée 42 est destinée à plaquer convenablement la carte contre les éléments de contact 45 au niveau de ladite butée et empêche que la carte, qui peut éventuellement présenter une courbure, ne soulève la butée. Si la butée est, ne serait-ce que légèrement soulevée, la valeur de la force F1 de libération de l'ouverture est diminuée.

Dans une réalisation avantageuse la butée ainsi que la nervure sont obtenues dans le même moulage que le couvercle; la force critique de basculement étant réglée par la raideur de la lame en matière plastique que forme ladite butée 42; Cette force pouvant, par exemple être comprise entre 70 et 90 Newtons.

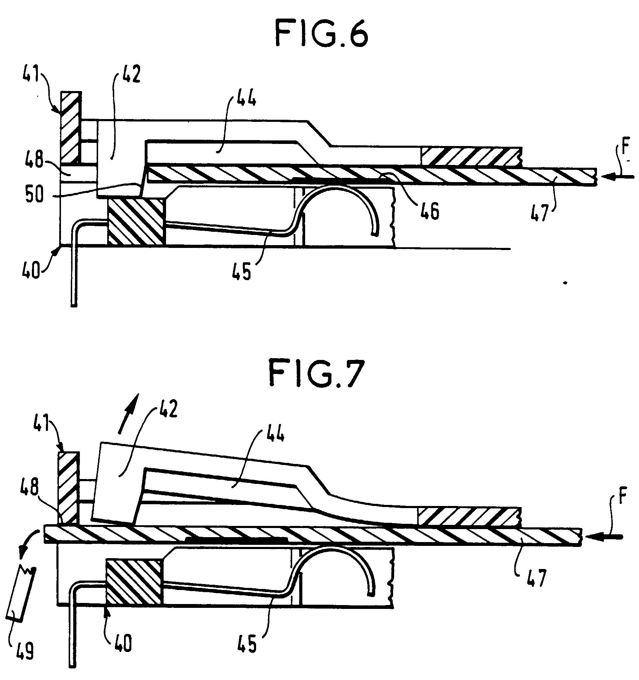

Les avantages du lecteur de carte à puce selon l'invention sont illustrés sur les figures 6 et 7.
- Sur la figure 6 la butée 42 joue son rôle normal de butée fin de course pour la carte 47, de manière à permettre le raccordement électrique souhaité entre les éléments de contact 45 du cadre 40 et les plages conductrices 46 de ladite carte 47.
- Sur la figure 7 la butée 42, s'est effacée, la force F d'appui exercée sur la carte 47 étant supérieure à une force F1 déterminée, libérant l'ouverture vers l'extrémité 48 du couloir de guidage de la carte 47; ce qui permet d'éjecter tout objet étranger 49.

Comme représenté sur ces figures 6 et 7, la butée 42 comporte d'une portée inclinée 50, par exemple d'inclinaison proche de 12°, contre laquelle une carte insérée normalement dans le lecteur vient s'arrêter, mais qui cause l'effacement de la butée lorsqu'elle est soumise à une pression anormalement élevée.

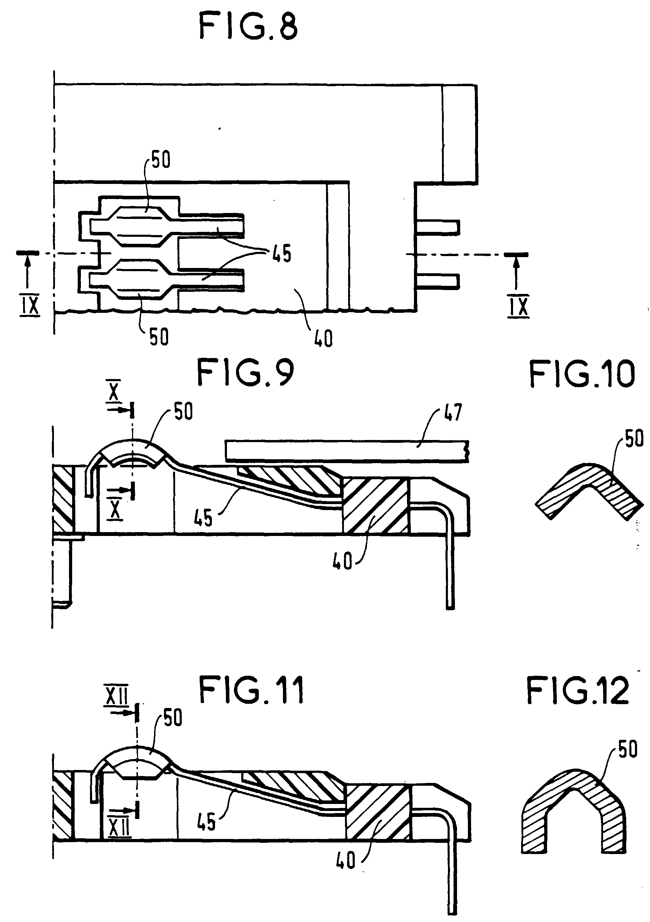

Les figures 8 à 12 illustrent plusieurs aspects de deux réalisations avantageuses du lecteur de l'invention tel qu'il soit difficile de détériorer les éléments de contact 45 du cadre 40.

Dans ces réalisations, les parties des éléments de contact 45, qui font saillie dans le couloir de guidage de la carte, portent des joues 50. Dans une première version représentée sur les figures 9 et 10, l'élément de contact 45 étant représenté en position repos, ces joues 50 sont petites, ce qui facilite la fabrication des éléments de contact par découpe en bande. Dans ce cas le passage est pratiquement complétement obstrué, la protection contre le vandalisme est donc efficaces. Dans la seconde version représentée sur les figures 11 et 12 les joues se prolongent jusque dans l'orifice qui a été ménagé dans le cadre de contact 40 pour permettre le recul de l'élément de contact. Le passage d'un objet sous le contact est ainsi empêché.

L'invention consiste donc à ajouter sur les parties des éléments de contact, qui sont susceptibles de faire saillie à l'intérieur du couloir de guidage, des joues latérales 50 en forme de Vé ou arrondies, ce qui ferme l'accès à la face arrière des contacts; ces joues 50 présentant une pente convenable pour que tout objet situé dans le couloir de guidage et appuyant en un point quelconque de l'élément de contact pousse ce dernier hors dudit couloir, sans risque de détérioration par poussée latérale sur l'élément de contact.

D'autre part, on voit sur la figure 9 une carte 47 avec laquelle on exerce une poussée latérale sur l'extrémité d'un élément de contact 45. Du fait de l'inclinaison, ici à 45°, de la joue du contact, celui-ci va s'effacer sous l'effet de la composante de la force d'appui de la carte 47 sur l'élément de contact 45, tandis que la force latérale qui tend à déformer ledit élément est pratiquement égale à la première composante et reste donc faible.

Il est également possible d'obstruer les ouvertures situées autour des éléments de contact, pour interdire à un objet introduit au niveau du couloir de guidage de la carte d'atteindre la face arrière des éléments de contact 45 excepté dans la zone dudit contact qui pourrait se trouver en saillie dans ledit couloir de guidage.

## Revendications

1. Lecteur de carte à puce comportant des éléments de contact (45), des moyens de guidage et de positionnement d'une carte, notamment un couloir de guidage, et une butée de positionnement fin de course (42), l'ensemble étant agencé de manière à assurer le raccordement électrique entre lesdit éléments de contact (45) et des plages conductrices (46) d'une carte (47) insérée dans le lecteur jusqu'à être en appui contre ladite butée de positionnement de fin de course, caractérisé en ce que la butée de positionnement fin de course (42) est une butée rétractable s'effaçant sous la force d'appui exercée par la carte lorsque cette force (F) est supérieure à une valeur déterminée (F1),et en ce que le couloir de guidage de la carte est ouvert à son extrémité interne (48) derrière ladite butée rétractable.

2. Lecteur de carte à puce selon la revendication 1, caractérisé en ce que la butée (42), fait partie du couvercle (41) dudit lecteur.

3. Lecteur de carte à puce selon la revendication 2, caractérisé en ce que la butée (42) est disposée à l'extrémité d'un bras mobile dont la face interne comporte une nervure centrale (44) servant à guider la carte insérée vers la zone de contact de la butée.

4. Lecteur de carte à puce, selon la revendication 3, caractérisé en ce que la partie mobile de la butée (42) comporte d'une portée inclinée (50) contre laquelle une carte insérée normalement dans le lecteur vient s'arrêter, mais qui cause l'effacement de la butée lorsqu'elle est soumise à une force d'appui supérieure à la valeur déterminée (F1).

5. Lecteur de carte à puce selon la revendication 4, caractérisé en ce que cette portée (50) est inclinée aux environs de 12°.

6. Lecteur à carte à puce selon la revendication 2, caractérisé en ce que le couvercle (41) comporte une nervure (51), fixe, disposée à côté de la butée (42) pour plaquer convenablement la carte (47) contre lesdits éléments de contact au niveau de cette butée (42).

7. Lecteur de carte à puce selon l'une quelconque des revendications précédentes, caractérisé en ce que la nervure (51) et la butée (42) sont obtenues lors du moulage du couvercle (41).

8. Lecteur de carte à puce selon l'une quelconque des revendications précédentes, caractérisé en ce que les parties des éléments de contact (45) qui font saillie dans le couloir de guidage portent des joues (50).

9. Lecteur de carte à puce selon la revendication 8, caractérisé en ce que ces joues (50) se prolongent jusque dans l'orifice qui a été ménagé dans le lecteur de manière à permettre le recul des éléments de contact (45).

## Claims

1. Chip card reader which includes contact elements (45), means of guiding and of positioning a card, especially a guide channel, and an end-of-travel positioning stop (42), the whole assembly being designed so as to ensure electrical connection between the said contact elements (45) and conducting areas (46) on a card (47) which is inserted into the reader until it bears against the said end-of-travel positioning stop, characterized in that the end-of-travel positioning stop (42) is a retractable stop which moves away under the bearing force exerted by the card on it when this force (F) is greater than a predetermined value (F1) and in that the channel for guiding the card is open at its internal end (48) behind the said retractable stop.

2. Chip card reader according to Claim 1, characterized in that the stop (42) forms part of the cover (41) of the said reader.

3. Chip card reader according to Claim 2, characterized in that the stop (42) is placed at the end of a movable arm, the internal face of which includes a central rib (44) serving to guide the inserted card towards the contact region of the stop.

4. Chip card reader according to Claim 3, characterized in that the movable part of the stop (42) includes an inclined bearing surface (50) against which a card inserted normally into the reader stops, but which causes the stop to move away when it is subjected to a bearing force greater than the defined value (F1).

5. Chip card reader according to Claim 4, characterized in that this bearing surface (50) is inclined at approximately 12°.

6. Chip card reader according to Claim 2, characterized in that the cover (41) includes a fixed rib (51) placed to the side of the stop (41) in order to press the card (47) appropriately against the said contact elements in the region of this stop (42).

7. Chip card reader according to any one of the preceding claims, characterized in that the rib (51) and the stop (42) are obtained during moulding of the cover (41).

8. Chip card reader according to any one of the preceding claims, characterized in that those parts of the contact elements (45) which project into the guide channel carry flanges (50).

9. Chip card reader according to Claim 8, characterized in that these flanges (50) extend right into the opening which has been made in the reader so as to allow the contact elements (45) to move back.

## Patentansprüche

1. Chipkartenlesevorrichtung mit Kontaktelementen (45), Führungs- und Positionierungselementen für eine Karte, insbesondere einem Führungsdurchgang und einem Anschlag (42) zur Positionierung am Ende des Weges, wobei die Anordnung eingerichtet ist, um die elektrische Verbindung zwischen den Kontaktelementen (45) und den leitenden Flächen (46) einer in die Lesevorrichtung bis zum Anschlagen an den Anschlag zur Positionierung am Ende des Weges eingeführten Karte (47)sicherzustellen, dadurch gekennzeichnet, daß
der Anschlag (42) zur Positionierung am Ende des Weges ein zurückziehbarer Anschlag ist, der unter der auf ihn durch die Karte ausgeübten Druckkraft zurückweicht, wenn diese Kraft (F) größer als ein gegebener Wert (F1) ist, und daß der Führungsdurchgang für die Karte an seinem inneren Ende (48) hinter dem zurückziehbaren Anschlag offen ist.

2. Chipkartenlesevorrichtung nach Anspruch 1, dadurch gekennzeichnet, daß der Anschlag (42) Teil des Deckels (41) der Lesevorrichtung ist.

3. Chipkartenlesevorrichtung nach Anspruch 2, dadurch gekennzeichnet, daß der Anschlag (42) am Ende eines beweglichen Arms angeordnet ist, dessen Innenseite eine zentrale Rippe (44) aufweist, die dazu dient, die eingeführte Karte zum Kontaktbereich des Anschlags zu führen.

4. Chipkartenlesevorrichtung nach Anspruch 3, dadurch gekennzeichnet, daß der bewegliche Bereich des Anschlags (42) eine geneigte Anlagefläche (50) aufweist, an der eine normal in die Lesevorrichtung eingeführte Karte zum Halten kommt, die aber das Zurückweichen des Anschlags bewirkt, wenn sie einer größeren Druckkraft als dem vorgegebenen Wert (F1) ausgesetzt ist.

5. Chipkartenlesevorrichtung nach Anspruch 4, dadurch gekennzeichnet, daß diese Anlagefläche unter in etwa 12° geneigt ist.

6. Chipkartenlesevorrichtung nach Anspruch 2, dadurch gekennzeichnet, daß der Deckel (41) eine ortsfeste Rippe (51) aufweist, die neben dem Anschlag (42) angeordnet ist, um die Karte (47) passend gegen die Kontaktelemente in Höhe dieses Anschlags (42) zu drücken.

7. Chipkartenlesevorrichtung nach einem der vorhergehenden Ansprüche, dadurch gekennzeichnet, daß die Rippe (51) und der Anschlag (42) bei der Formung des Deckels (41) erhalten werden.

8. Chipkartenlesevorrichtung nach einem der vorhergehenden Ansprüche, dadurch gekennzeichnet, daß die Bereiche der Kontaktelemente (45), die in den Führungsdurchgang vorspringen, Seitenwangen (50) tragen.

9. Chipkartenlesevorrichtung nach Anspruch 8, dadurch gekennzeichnet, daß die Seitenwangen (50) bis in die Öffnung hinein verlängert sind, die in der Lesevorrichtung gebildet ist, um das Zurückweichen der Kontaktelemente (45) zu ermöglichen.
